# FASCICULE DE BREVET EUROPEEN

(11) **EP 1 553 237 B1**
(45) Date de publication et mention de la délivrance du brevet: **08.02.2017**
(21) Numéro de dépôt: 04293156.8
(22) Date de dépôt: 29.12.2004
(51) Int. Cl.: E04B 5/48, E04C 2/52

(54) **Goulette pour planchers et parois de construction**
Trogelement für Decke und Wand
Trough element for floors and contruction walls

(30) Priorité: 09.01.2004 FR 0400167; 24.05.2004 FR 0405567
(43) Date de publication de la demande: 13.07.2005
(73) Titulaire: KP1, 84000 Avignon (FR)
(72) Inventeur: Paris, Jean-Marc, 84700 Sorgues (FR); Herreria, Christian, 84000 Avignon (FR)
(74) Mandataire: Robert, Jean-Pierre

(56) Documents cités:
- DE-A1- 3 720 554
- DE-U1- 29 807 539
- FR-A- 2 581 435
- GB-A- 1 432 566
- GB-A- 2 233 731
- US-A- 5 042 569

## Description

La présente invention concerne une goulotte pour les planchers et les parois de construction.

### ARRIERE-PLAN DE L'INVENTION

Une paroi verticale ou horizontale d'une construction immobilière comporte une structure de support sur laquelle, du côté intérieur de la paroi, on rapporte un isolant formé le plus souvent de plaques.

En ce qui concerne un plancher chauffant, notamment dans le cas de constructions destinées au logement en maisons individuelles, la structure est plus complexe et comporte, au-dessus d'un support (plancher, dalle de compression...), un matériau de ravoirage formant une couche de 4 à 5 centimètres d'épaisseur permettant un rattrapage des inégalités de la dalle et, surtout, offrant aux canalisations de fluide sanitaire ou de gaines électriques un espace de mise en place dans lequel elles sont noyées. Incorporées dans cette couche de ravoirage, ces canalisations ne sont plus un obstacle à la mise en place de plaques de matériau isolant sur laquelle seront disposées les conduites caloporteuses de chauffage.

Ces conduites sont en général noyées dans une couche d'enrobage.

Cette structure demande une intervention lourde sur chantier en particulier au niveau du ravoirage. Sa réalisation, en outre, n'est pas à l'abri de malfaçons. En effet, il n'est pas rare que le revêtement de ravoirage soit réalisé avant la mise en place des canalisations d'eau sanitaire ou des gaines de conducteurs électriques. Les gaines et canalisations se trouvent alors logées dans la couche isolante (imprimées dans celle-ci ou logées dans des saignées de fortune réalisées dans cette couche) qui sont la source de désordres du fait des modifications locales de la compressibilité du revêtement isolant. Ces désordres se traduisent à la longue par un défaut de surface du sol.

Pour ce qui concerne les parois verticales, le revêtement isolant thermique et/ou phonique est le plus souvent découpé pour dégager le long des murs un passage pour une canalisation ou un faisceau de gaines, ce qui engendre une solution dans la continuité de l'isolation et la formation d'un pont thermique si on ne prend pas la précaution de restaurer au mieux l'isolation au voisinage de ces canalisations. Une goulotte selon le préambule de la revendication 1 est décrite dans le document DE 298 07 539 U1.

Il existe donc un besoin de rendre plus rationnelle la réalisation de ces planchers et parois verticales afin d'éviter les malfaçons.

### BREVE DESCRIPTION DE L'INVENTION

A cet effet, l'invention a pour premier objet une goulotte pour parois horizontales ou verticales de construction revêtues d'une couche d'isolation, réalisée en matériau isolant thermique et/ou phonique composée d'une base inférieure définissant un chenal pour accueillir des gaines ou des canalisations et d'un capot pour recouvrir le chenal.

La goulotte selon l'invention constitue un guide de placement et de maintien des canalisations d'eau sanitaire ou des gaines électriques et ce, dans un matériau isolant et dans un espace défini par l'épaisseur du revêtement isolant. La goulotte a donc une double fonction celle de guider et de maintenir les canalisations et conduites et celle de compléter à l'endroit de leur passage la couche isolante tout en assurant la continuité de la surface supérieure de cette couche et en assurant une homogénéité de la tenue à la compression sur la totalité de la couche isolante.

Selon l'invention , cette goulotte est réalisée de manière préfabriquée par tronçons, chaque tronçon comportant un élément de capot et un élément de base et possédant en extrémité des moyens d'alignement pour assurer la continuité de la géométrie de la goulotte d'un tronçon à l'autre. Ces moyens d'alignement permettent de disposer d'une surface supérieure du capot sans solution de continuité ni décalage entre deux tronçons consécutifs.

De manière avantageuse chaque élément de base comporte dans le chenal en une seule pièce avec lui des moyens de clipage des canalisations ou gaines qu'il reçoit. Les gaines et les canalisations sont ainsi immobilisées à l'intérieur de la goulotte formée par les tronçons successifs et servent également d'armature de rigidification de ces tronçons.

Selon l'invention la goulotte est de section rectangulaire dont l'épaisseur est réglable par l'emploi de capots d'épaisseurs différentes. En effet on sait qu'il existe plusieurs types de plaques de revêtement isolant qui diffèrent essentiellement par des épaisseurs allant de 47 à 70 mm. Avec une base de goulotte unique et des capots d'épaisseurs différentes, par exemple trois sortes de capots, on couvre la majeure partie des besoins du marché.

Il sera également intéressant que la face inférieure de l'élément de base soit pourvue de marquage pour guider la réalisation de coupes droites ou biaises de même que la face supérieure du capot. La goulotte comporte des éléments rectilignes et des éléments d'angle, le chenal des éléments d'angle étant courbe.

Les éléments de capot et les éléments de base d'un tronçon de goulotte comportent des moyens pour leur encliquetage mutuel après la pose des canalisations.

D'autres caractéristiques et avantages de l'invention ressortiront de la description donnée ci-après de quelques modes de sa réalisation.

### BREVE DESCRIPTION DES DESSINS

Il sera fait référence aux dessins annexés parmi lesquels :
- la figure 1 illustre l'état de la technique en ce qui concerne les planchers et notamment les planchers chauffants ;
- la figure 2 est une vue partielle en coupe d'un plancher conforme à l'invention ;
- la figure 3 illustre par une vue en bout le profil courant d'une base de goulotte et de ses différents capots ;
- la figure 4 illustre le rainurage de la face inférieure d'un élément de base de la goulotte selon l'invention ;
- la figure 5 et la figure 6 sont des illustrations de deux réalisations possibles de l'angle d'un plancher ou d'une paroi conforme à l'invention.

### DESCRIPTION DETAILLEE DE L'INVENTION

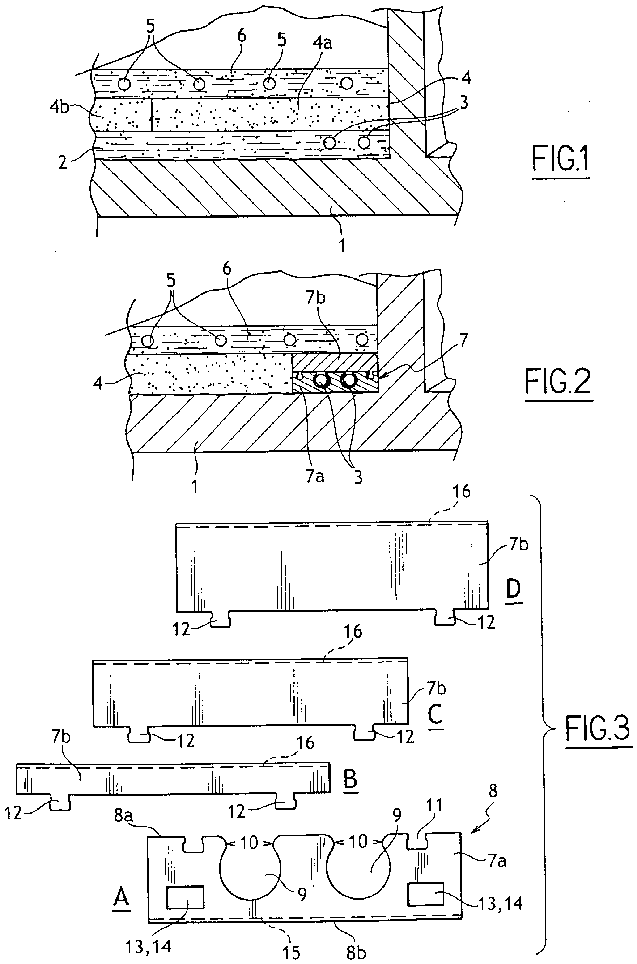

A la figure 1 on a représenté par une coupe partielle et schématique la réalisation classique d'un plancher chauffant sur une structure de support ici formée par une dalle 1 de compression. Sur cette dalle donc, on réalise une couche dite de ravoirage 2 qui permet de noyer des canalisations d'eau sanitaire chaude et froide ou des gaines de conducteur électrique 3. Au-dessus de cette couche de ravoirage 2 le plancher comporte un revêtement isolant au plan thermique formé par la juxtaposition de plusieurs plaques de matériau isolant 4a, 4b. Au-dessus de ce matériau isolant, le plancher comporte des canalisations caloporteuses 5 formées soit par des résistances électriques soit par des canalisations d'eau chaude, formant échangeur de chaleur et enrobées dans une chape 6 qui formera le support d'un revêtement de sol non représenté. La chape 6 est dans certaines réalisations récentes remplacée par une épaisse couche qui assure en même temps que l'enrobage, le collage du revêtement de sol qui est un carrelage.

Le revêtement 2 de ravoirage a pour fonction essentielle de constituer une épaisseur dans laquelle peuvent être logées les conduites et canalisations 3. Un rôle secondaire de ce revêtement est de rattraper les inégalités de la surface supérieure de la dalle de compression 1 mais ces dernières sont de plus en plus faibles avec les méthodes modernes de réalisation de ces dalles. L'opération de ravoirage demande une main d'oeuvre importante sur le chantier.

A la figure 2 on a représenté un plancher conforme à l'invention dans lequel au-dessus de la dalle 1 il n'existe plus de revêtement de ravoirage 2. En effet la dalle 1 supporte directement des panneaux ou plaques 4 d'isolation et, par exemple à l'angle d'un mur, une goulotte 7 dont l'épaisseur est égale à l'épaisseur des plaques 4 et qui constitue un chenal pour le passage des canalisations et gaines 3. Au-dessus de l'ensemble formé par les plaques d'isolations 4 et la goulotte 7 qui est elle-même en un matériau d'isolation, on procède à la mise en place des échangeurs 5 et à la réalisation de la chape 6.

Cette disposition est avantageuse pour plusieurs raisons. L'une de celle-ci est qu'elle constitue un moyen détrompeur : son absence est une alerte quant à la mise en place ou à l'oubli de cette mise en place des canalisations 3. Il est alors aisé de retailler dans les plaques isolantes 3 un espace pour accommoder une goulotte et y placer les canalisations oubliées. On comprend que cet avantage est essentiel car dans les planchers selon l'état de la technique, il fallait creuser une saignée dans le revêtement de ravoirage pour pouvoir y placer les conduites 3 oubliées puis combler cette saignée de manière que les plaques d'isolation 4a, 4b retrouvent un appui certain et régulier sur le ravoirage. Or, il n'est pas rare qu'ayant procédé à la réparation, les opérateurs procèdent à un comblement imparfait si bien que des plaques telles que 4b ne sont pas bien soutenues notamment au bord d'un plancher et cette absence de soutien peut constituer la cause d'un défaut apparaissant à la surface du sol.

Un autre avantage de cette goulotte est que les conduites 3 sont thermiquement isolés par le matériau même de la goulotte et ce, de manière beaucoup plus efficace que lorsqu'elles étaient noyées dans un revêtement de ravoirage.

Enfin un troisième avantage et non le moindre est que le plancher selon l'invention est réalisé sans la dépense et le temps nécessaires à la confection de la couche de ravoirage 2.

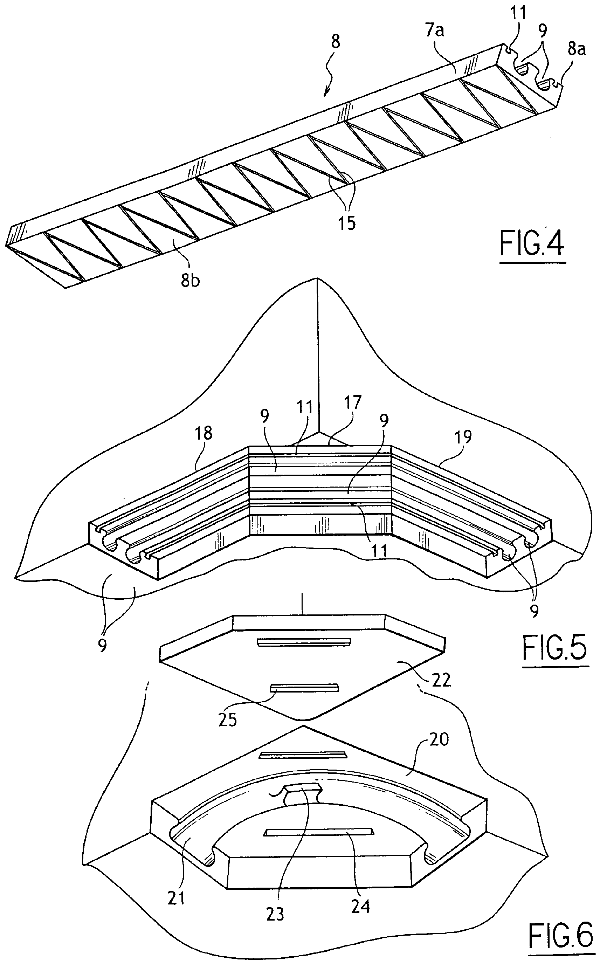

De manière préférée une goulotte 7 conforme à l'invention est réalisée en deux parties à savoir un élément de base 7a et un capot 7b qui vient recouvrir l'élément de base 7a. L'élément de base 7a est réalisé sous forme de tronçons tels que celui 8 représenté à la figure 4, en un matériau isolant (polystyrène expansé par exemple). Il comporte un chenal formé ici par deux logements cylindriques 9 qui s'ouvrent sur la face supérieure 8a de chaque tronçon 8 par une ouverture 10. La largeur de cette ouverture 10 est inférieure au diamètre de ces logements cylindriques ou plus exactement au diamètre des canalisations ou gaines que ces logements doivent accommoder. Les conduites 3 sont donc introduites a force dans les logements 9 dont les parois et l'ouverture 10 réduite forment des moyens de clipage de ces conduites 3 dans l'élément de base 7a. Deux rainures légèrement en queue d'aronde 11 courent de chaque côté des logements 9 sur la face supérieure 8a de chaque tronçon 8. Ces rainures sont destinées à recevoir des nervures ou tenons 12 de profil complémentaire, prévus en saillie à la face inférieure du capot 7b destiné à refermer l'élément de base 7a. Les parties B, C et D de la figure 3 illustrent trois capots différents, réalisés comme l'élément de base 7a sous forme de tronçons, et présentant des épaisseurs différentes. Ainsi, en associant l'un ou l'autre de ces capots à un élément de base standard, on prend en compte les différentes épaisseurs qui existent sur le marché en ce qui concerne les plaques de matériau isolant 4. En outre on pourra disposer de goulottes issues de matériaux déterminés de manière que les caractéristiques de la couche isolante soient partout homogènes.

On notera enfin sur cette figure 3 d'une part, que chaque tronçon 8 d'élément de base vue en bout, possède à une extrémité des ergots 13 tandis que son autre extrémité est pourvue de logement 14 susceptible d'accommoder les ergots 13. Chaque extrémité peut être également en alternative équipée d'un ergot et d'un logement. Ces ergots et logements constituent des moyens pour aligner bout à bout les tronçons d'élément de base afin de préserver la continuité du profil d'une goulotte notamment en assurant leur maintien relatif lors de leur mise en place. D'autre part, on constate que la face inférieure 8b de chaque tronçon 8 et la face supérieure de chaque couvercle présentent des rainures 15, 16 qui, pour l'élément de base 7a sont visibles sur la figure 4. Ces rainures constituent des guides de sciage ou de coupe des tronçons 8 pour obtenir des coupes droites ou biaises correctes afin, par exemple, de réaliser la disposition illustrée par la figure 5.

La figure 5 illustre une manière de réaliser une goulotte dans un angle de plancher à partir de tronçons retaillés d'éléments de base et bien entendu de couvercles. On comprend en effet que du fait de la nature du matériau constituant ses éléments de bases (polystyrène expansé), on peut assez facilement accommoder une canalisation ou une gaine cintrée à 90° dans une goulotte qui offre au lieu d'un coude un polygone à trois côtés représentant approximativement le quart de cercle emprunté par la canalisation ou la gaine. La déformabilité du matériau et la longueur du tronçon 17 d'élément de base formant la liaison entre les deux tronçons perpendiculaires 18 et 19 permettent de prendre en compte pratiquement tous les rayons de courbure. L'avantage de cette réalisation réside dans le fait qu'il n'est pas nécessaire de prévoir des pièces d'angle particulière. L'inconvénient réside dans le fait qu'il faille prévoir un remplissage de l'angle du plancher au-delà du tronçon 17.

Pour pallier cet inconvénient il est possible, conformément à l'invention, de prévoir un élément d'angle 20 comme représenté à la figure 6 dont le chenal 21 est courbe et qui est recouvert par un couvercle 22 de forme correspondant à la forme de l'élément d'angle. Un ergot de clipage 23 est prévu au centre du chenal 21 tandis que des nervures et rainures 24, 25 sont prévues en correspondance entre l'élément de base 20 et le couvercle 22. Dans l'hypothèse de la figure 6 comme dans les autres réalisations, il existera des couvercles ou capots 22 de plusieurs épaisseurs pour tenir compte des variétés susceptibles d'être rencontrées en ce qui concerne l'épaisseur des plaques de matériau isolant.

Dans le cas d'une utilisation d'une goulotte conforme à l'invention dans une paroi verticale, il suffit de se reporter à la figure 2 de laquelle on supprime les éléments tubulaires 5 et la couche d'enrobage 6. On est alors en face d'une coupe horizontale d'un mur vertical 1 avec son isolant intérieur 4 thermique et/ou phonique et la goulotte 7 servant de passage et de support à des canalisations ou gaines verticales 3.

La goulotte affleure la surface libre de l'isolant 4 et le mur peut recevoir tout parement de finition sans qu'il ait été créé un pont thermique ou une rupture d'isolation acoustique entre l'extérieur et l'intérieur de l'habitat. On comprend très bien que les dispositions illustrées par les figures 5 et 6 s'appliquent par exemple entre le bord inférieur (ou supérieur) d'un mur et un bord latéral de celui-ci pour guider des canalisations coudées entre un tronçon vertical et un tronçon horizontal.

## Revendications

1. Goulotte pour parois horizontales et verticales de construction pourvues d'un revêtement isolant, réalisée en matériau isolant thermique et/ou phonique, de section rectangulaire, composée d'une base inférieure (7a) définissant un chenal (9) pour accueillir des gaines ou canalisations (3) et d'un capot (7b) pour recouvrir le chenal, **caractérisée en ce qu'**elle est d'épaisseur réglable par l'emploi de capots (7b) d'épaisseurs différentes et **en ce qu'**elle est réalisée par tronçons (8) préfabriqués, chaque tronçon (8) comportant un élément de capot (7b) et un élément de base (7a) et possédant des moyens (13,14) pour aligner bout à bout les tronçons (8) d'éléments de base (7a) afin d'assurer la continuité de la géométrie de la goulotte.

2. Goulotte selon la revendication 1, **caractérisée en ce que** chaque élément de base comporte dans le chenal, en une seule pièce des moyens (23) de clipage des canalisations ou gaine qu'il reçoit.

3. Goulotte selon la revendication 1, **caractérisée en ce que** la face inférieure de chaque tronçon d'élément de base (7a) est pourvue de marquage (15) pour guider la réalisation de coupes droites ou biaises.

4. Goulotte selon l'une des revendications 1 à 3, **caractérisée en ce qu'**elle comporte des éléments ou tronçons rectilignes (8) et des éléments d'angle (20) et **en ce que** le chenal (21) des éléments d'angle est courbe.

5. Goulotte selon l'une des revendications 1 à 4, **caractérisée en ce que** les éléments de base et les éléments de capot comportent des moyens (11, 12) de leur encliquetage mutuel.

## Patentansprüche

1. Kanal für horizontale und vertikale Bauwände, die mit einer isolierenden Verkleidung versehen sind, wobei der Kanal aus einem wärme- und/oder schalldämmenden Material hergestellt ist, einen rechteckigen Querschnitt hat und aus einer unteren Basis (7a), die eine Rinne (9) definiert, um Umhüllungen oder Leitungen (3) aufzunehmen, und einer Abdeckung (7b) gebildet ist, um die Rinne abzudecken, **dadurch gekennzeichnet, dass** er eine Dicke hat, die durch die Verwendung von Abdeckungen (7b) unterschiedlicher Dicke regulierbar ist, und dass er aus vorgefertigten Abschnitten (8) hergestellt ist, wobei jeder Abschnitt (8) ein Abdeckelement (7b) und ein Basiselement (7a) umfasst und Mittel (13, 14) aufweist, um die Abschnitte (8) aus Basiselementen (7a) aneinander auszurichten, um die Kontinuität der Geometrie des Kanals sicherzustellen.

2. Kanal nach Anspruch 1, **dadurch gekennzeichnet, dass** jedes Basiselement in der Rinne einstückig mit ihm ausgebildete Mittel (23) zum Festklemmen der Leitungen oder Umhüllungen hat, die es aufnimmt.

3. Kanal nach Anspruch 1, **dadurch gekennzeichnet, dass** die Unterseite jedes Basiselementabschnittes (7a) mit einer Markierung (15) versehen ist, um die Durchführung von Gerad- oder Schrägschnitten zu führen.

4. Kanal nach einem der Ansprüche 1 bis 3, **dadurch gekennzeichnet, dass** er geradlinige Abschnitte oder Elemente (8) und Winkelelemente (20) umfasst, und dass die Rinne (21) der Winkelelemente gebogen ist.

5. Kanal nach einem der Ansprüche 1 bis 4, **dadurch gekennzeichnet, dass** die Basiselemente und die Abdeckelement Mittel (11, 12) zu ihrer gegenseitigen Einrastung umfassen.

## Claims

1. Trough for horizontal and vertical construction walls provided with an insulating coating, **characterised in that** it is made of thermal and/or sound insulating material, of rectangular section, comprising a lower base (7a) defining a channel (9) to accommodate ducts or pipes (3) and a cover (7b) for covering the channel, **characterized in that** its thickness can be adjusted by using covers (7b) of different thicknesses and **in that** it is made up of prefabricated sections (8), each section (8) having a cover element (7b) and a base element (7a) and having means (13, 14) for end-to-end alignment of the sections (8) of the base element (7a) to ensure continuity of the geometry of the trough.

2. Trough according to claim 1, **characterized in that** each base element has in the channel means (23) in one piece for clipping the pipes or ducts that it receives.

3. Trough according to claim 1, **characterized in that** the underside of each section of a base element (7a) is provided with markings (15) for guiding right-angle or mitred cuts.

4. Trough according to any one of claims 1 to 3, **characterized in that** it comprises rectilinear elements or sections (8) and corner elements (20) and **in that** the channel (21) of the corner elements is curved.

5. Trough according to any one of claims 1 to 4, **characterized in that** the base elements and the cover elements comprise means (11, 12) for clipping them together.
